# EUROPEAN PATENT APPLICATION

(11) **EP 0 791 605 A2**
(43) Date of publication of application: **27.08.1997**
(21) Application number: 97300859.2
(22) Date of filing: 11.02.1997
(51) Int. Cl.: C08F 8/10

(54) **Acylated polyallylamine and process for producing the same**

(30) Priority: 20.02.1996 JP 31713/96
(71) Applicant: NITTO BOSEKI CO., LTD., Fukushima-shi (JP)
(72) Inventor: Kato, Tadashi, Koriyama-shi (JP); Hayashi, Ikuo, Koriyama-shi (JP); Takeuchi, Minoru, Koriyama-shi (JP); Endo, Tadao, Koriyama-shi (JP)
(74) Representative: Votier, Sidney David

(57) **Abstract**

Acylated polyallylamine, whose cation density is controlled as desired, is easily produced by treating a solution of polyallylamine having a polymerization degree of at least 10 with a carboxylic acid anhydride such as acetic anhydride. Also, it is suggested that the present acetylated polyallylamine is used as a reactive dye-fixing agent, a direct dye-fixing agent, etc.

## Description

### BACKGROUND OF THE INVENTION

### FIELD OF THE INVENTION

The present invention relates to a novel polyallylamine derivative and a process for producing the same, and more particularly to a novel polyallylamine derivative with less cations and a simple process for producing the same.

### RELATED ART

Polyallylamines are linear olefinic polymers having primary amino groups (-NH₂) on side chains, which are cationic macromolecules well soluble in water and positively chargeable in water. Polyallylamines have structure and properties of peculiar reactive macromolecules and thus have been so far used in a variety of fields such as a reactive dye-fixing agent, a direct dye-fixing agent, a food preservative, etc.

It was also proposed to use polyallylamines in such fields as silver halide-based photographic photosensitive materials, controlled release medical compositions, ion exchange resins, functional films, etc. However, as mentioned in "Synthesis and Applications of Reactive Polymers", pages 80-92 (1989), published by CMC, too many reactive groups are not generally required for the reactive macromolecules, because they sometimes bring about inconveniences. On the other hand, it would be possible to synthesize polymers with smaller number of amino groups by copolymerization, but monoallyl monomers fail to copolymerize with ordinary vinyl monomers and thus it is difficult to synthesize allylamine copolymers with a low cation density by copolymerization.

Methods of converting the -NH₂ groups of polyallylamines to inert groups by reaction with other compounds are now under study. For example, polyallylamine derivatives such as poly-(N-allylurea) (JP-B-63-43403), macromolecular compounds modified with fluorine-containing groups (JP-A-1-207312 and JP-A-2-64114), etc. are known. However, these polyallylamine derivatives still have such problems that many of the reagents used for the production of the derivatives are toxic and organic solvents must be used as reaction solvents, rendering the purification, etc. difficult, and thus have not been practically used up to now.

### SUMMARY OF THE INVENTION

An object of the present invention is to provide a novel polyallylamine with a low cation density and a simple process for producing the same.

As a result of extensive studies of polyallylamines with a smaller cation group content and simple processes for producing the same, the present inventors have found that a novel polyallylamine with a low cation density can be simply produced by treating polyallylamine with a carboxylic acid anhydride, and have conceived the present invention on the basis of this finding.

The present invention provides an acylated polyallylamine represented by the following general formula or a salt thereof: 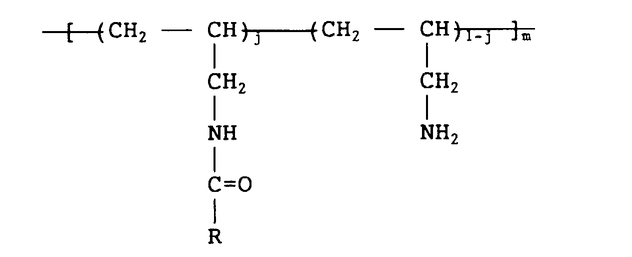 wherein m is an integer of at least 10; j is number satisfying a relationship of 0 < j < 1; and R is an nor iso-alkyl group having 1 to 17 carbon atoms.

Furthermore, the present invention provides a process for producing an acylated polyallylamine represented by the following general formula or a salt thereof: 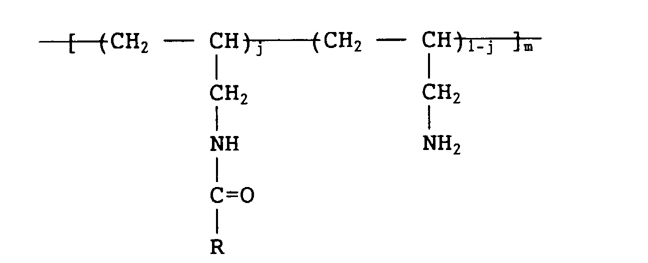 wherein m is an integer of at least 10; j is number satisfying a relationship of 0 < j < 1; and R is an nor iso-alkyl group having 1 to 17 carbon atoms, which comprises treating a polyallylamine represented by the following general formula: 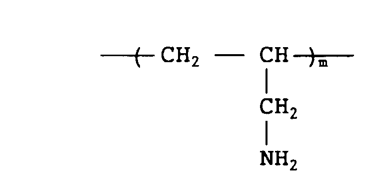 wherein m is an integer of at least 10, with a carboxylic acid anhydride represented by the following general formula:

(RCO)₂O

wherein R is an n- or iso-alkyl group having 1 to 17 carbon atoms, and then neutralizing by-produced carboxylic acid with an alkali, if required, followed by further treatment with an organic or inorganic acid.

### DETAILED DESCRIPTION OF THE INVENTION

Starting material polyallylamine has a polymerization degree m of at least 10, preferably 10 to 5,000, and is preferably of a free type. Free-type polyallylamine for use in the present invention can be those obtained by neutralizing known polyallylamine acid salt, followed by dialysis to remove the neutralization salts therefrom. As starting material polyallylamine, commercially available aqueous 15% polyallylamine (molecular weight: about 10,000) solution PAA-15 (trademark of a product made by Nitto Bosekei K.K., Japan), aqueous 10% polyallylamine (molecular weight: about 10,000) solution PAA-10C (trademark of a product made by Nitto Boseki K.K., Japan), aqueous 20% polyallylamine (molecular weight: about 10,000) solution PAA-L (trademark of a product made by Nitto Boseki K.K., Japan), aqueous 20% polyallylamine (molecular weight; about 100,000) solution PAA-H (trademark of a product made by Nitto Boseki K.K., Japan), etc. can be used as such.

Starting material carboxylic acid anhydride can be represented by the following general formula:

(RCO)₂O

wherein R is an n- or iso-alkyl group having 1 to 17 carbon atoms, and includes, for example, acetic anhydride, propionic anhydride, n-butyric anhydride, isobutyric anhydride, valeric anhydride, hexanoic anhydride, octanoic anhydride, decanoic anhydride, lauric anhydride, stearic anhydride, palmitic anhydride, etc. Preferable starting material carboxylic acid anhydride is a carboxylic acid anhydride, whose R is an n- or iso-alkyl group having 1 to 11 carbon atoms in the foregoing general formula, from the viewpoint of its solubility.

When not more than 50% by mole of amino groups of polyallylamine is to be acylated with a carboxylic acid anhydride, the amount of carboxylic acid anhydride can be equivalent to the amount of amino groups to be acylated.

The solvent for making a polyallylamine solution can be water, an organic solvent or a mixture of water and an organic solvent. The organic solvent for use in the present invention is preferably a polar solvent from the viewpoint of starting material solubility and includes, for example, alcohols such as methyl alcohol, ethyl alcohol, n-propyl alcohol, isopropyl alcohol, n-butyl alcohol, etc., acetonitrile, formamide, N,N-dimethyl formamide, dimethyl sulfoxide, tetrahydrofuran, and 1,4-dioxane. Above all, water is preferable as a solvent for making a polyallylamine solution from the viewpoints of safety and easy handling.

In the treatment of polyallylamine with a carboxylic acid anhydride according to the present invention, it is preferable to add the carboxylic acid anhydride slowly dropwise to the polyallylamine solution. The dropwise addition is usually carried out over a period of 2 to 8 hours. Particularly, in the case of a small reaction scale, the dropwise addition is carried out over a period of 1 to 8 hours. It is preferable to conduct the reaction with stirring.

The reaction is exothermic and thus is carried out while cooling the reactor with ice, etc. to maintain the reaction solution at a temperature of not more than 40°C, preferably 0° to 10°C.

After the acylation reaction, an aqueous alkali solution such as sodium hydroxide, potassium hydroxide, sodium carbonate, or the like is usually added to the reaction solution to neutralize carboxylic acid by-produced by the acylation reaction of the carboxylic acid anhydride with the amino groups on the side chains of polyallylamine, whereby the free-type, acylated polyallylamine solution of the present invention can be obtained.

In case of acylation of more than 50% by mole of the amino groups of polyallylamine, the acylation reaction may be made to proceed while neutralizing carboxylic acid to be by-produced by the proceeding acylation reaction with the amino groups on the side chains of polyallylamine appropriately with an alkali such as sodium hydroxide, potassium hydroxide, sodium carbonate, or the like. In that case, it is preferable to maintain the reaction solution at a pH of 10 to 12. During the neutralization, the reaction solution is preferably maintained at a temperature of 0° to 10°C.

After the neutralization, the resulting solution is dialyzed to remove the neutralization salts, whereby the purified free-type acylated polyallylamine solution of the present invention can be obtained.

For the dialysis to remove the neutralization salts, it is preferable to use electrodialysis as disclosed in JP-B-7-68289 owing to easy operation. In that case, the amounts of salts in the acylated polyallylamine solution under the purification process can be simply checked by gel permeation chromatography (GPC) of the solution. That is, the end of purification can be detected by the GPC.

Inorganic or organic acid salts of acylated polyallylamine can be obtained by adding to the purified free-type acylated polyallylamine solution of the present invention of an appropriate amount of an inorganic or organic acid or preferably an equivalent amount of the inorganic or organic acid to the free amino groups. In that case, the inorganic acid includes, for example, hydrochloric acid, hydrobromic acid, hydroiodic acid, sulfuric acid, sulfurous acid, phosphoric acid, phosphorous acid, hypophosphorous acid, etc. The organic acid includes, for example, acetic acid, propionic acid, n-butyric acid, isobutyric acid, n-valeric acid, isovaleric acid, methylethylacetic acid, trimethylacetic acid, caproic acid, heptoic acid, caprylic acid, capric acid, undecylic acid, lauric acid, palmitic acid, stearic acid, benzoic acid, etc.

It is also possible to obtain inorganic or organic acid salts of acylated polyallylamine in a solid state through reprecipitation by adding a solvent such as acetone, etc. to the acylated polyallylamine salt solution of the present invention.

Acylation degree of the present acylated polyallylamine depends on the amount of starting material carboxylic acid anhydride as used. When the carboxylic acid anhydride is used in less than an equivalent amount to the total amino groups of the starting material polyallylamine, the carboxylic acid anhydride is usually almost all consumed as an acylating agent. That is, the cation density of the present acylated polyallylamine can be adjusted by changing the amount of carboxylic acid anhydride to be used. The acylation degree of the present acylated polyallylamine can be determined by NMR analysis or colloid titration method. Furthermore, the hydrophobic property of the present acylated polyallylamine can be adjusted by selecting the kind of carboxylic acid anhydride to be used. That is, in the present invention, acylated polyallylamine with any desired cation density and hydrophobic property can be prepared and used in a specific applications.

### BRIEF DESCRIPTION OF THE DRAWINGS

Fig. 1 shows NMR spectrum of 30 mol.% acetylated polyallylamine synthesized in Example 1.

Fig. 2 shows results of GPC analysis of 30 mol.% acetylated polyallylamine synthesized in Example 1 before and after electrodialysis.

Fig. 3 shows IR spectrum of 30 mol.% acetylated polyallylamine hydrochloride synthesized in Example 2.

Fig. 4 shows NMR spectrum of 50 mol.% acetylated polyallylamine synthesized in Example 3.

Fig. 5 shows IR spectrum of 50 mol.% acetylated polyallylamine hydrochloride synthesized in Example 4.

Fig. 6 shows IR spectrum of 40 mol.% propionylated polyallylamine hydrochloride synthesized in Example 7.

Fig. 7 shows IR spectrum of 20 mol.% n-butyrylated polyallylamine hydrochloride synthesized in Example 7.

Fig. 8 shows IR spectrum of 20 mol.% n-pentanoylated polyallylamine hydrochloride synthesized in Example 10.

Fig. 9 shows IR spectrum of 20 mol.% n-hexanoylated polyallylamine hydrochloride synthesized in Example 11.

Fig. 10 shows IR spectrum of 40 mol.% n-butyrylated polyallylamine hydrochloride synthesized in Example 12.

Fig. 11 shows IR spectrum of 40 mol.% n-pentanoylated polyallylamine hydrochloride synthesized in Example 13.

Fig. 12 shows IR spectrum of 40 mol.% n-hexanoylated polyallylamine hydrochloride synthesized in Example 14.

Fig. 13 shows IR spectrum of 40 mol.% isobytyrylated polyallylamine hydrochloride synthesized in Example 15.

Fig. 14 shows IR spectrum of 40 mol.% isopentanoylated polyallylamine hydrochloride synthesized in Example 16.

### PREFERRED EMBODIMENTS OF THE INVENTION

### Example 1

### Synthesis of 30 mol.% acetylated polyallylamine

3,443 g (6.0 moles in terms of PAA monomer unit) of an aqueous 10% polyallylamine solution PAA-10C (trademark of a product made by Nitto Boseki K.K., Japan) having a molecular weight of about 10,000 was charged into a 4-necked, round bottom separable flask having a capacity of 5 ℓ provided with a stirrer, a Dimroth reflux condenser, a dropping funnel and a thermometer, and 189.54 g (1.80 moles) of acetic anhydride was slowly dropwise added thereto over 4 hours to complete the entire dropwise additional, while cooling the flask with ice water with stirring at 200 rpm. Temperature was maintained at 0° to 5°C during the reaction.

Then, 511.13 g (1.90 moles) of an aqueous 14.83% sodium hydroxide solution was dropwise added thereto to neutralized by-produced acetic acid, while continuously cooling the flask with stirring and maintaining the same temperature as above.

After the neutralization, the resulting solution was electrodialyzed over 44 hours according to the method as disclosed in JP-B-7-68289 to remove the salts, whereby free-type, 30 mol.% acetylated polyallylamine, that is, polymer 30 mol.% acetylated with respect to the total amino groups of the starting material polyallylamine, was obtained.

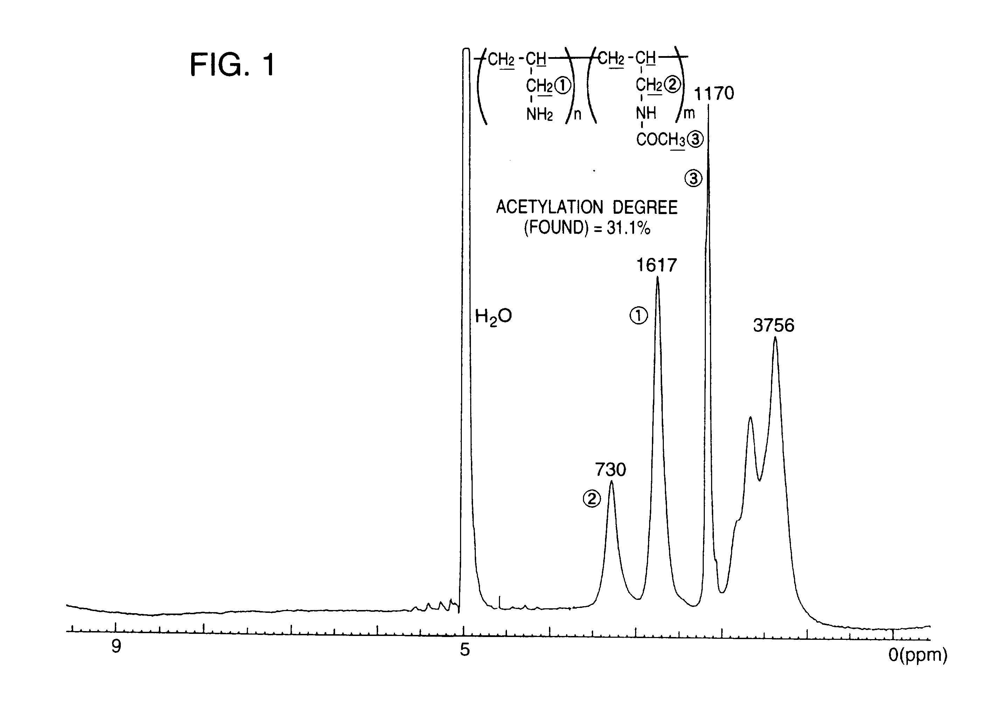

The water of the aqueous solution was replaced with heavy water and then the solution was subjected to NMR analysis. The results are shown in Fig. 1. The NMR analysis revealed that, from the area ratio of the hydrogen of methylene group (①) bonded to the amino group to the hydrogen of methylene group (②) bonded to the amide group, the acetylation degree of the acetylated polyallylamine was 31%.

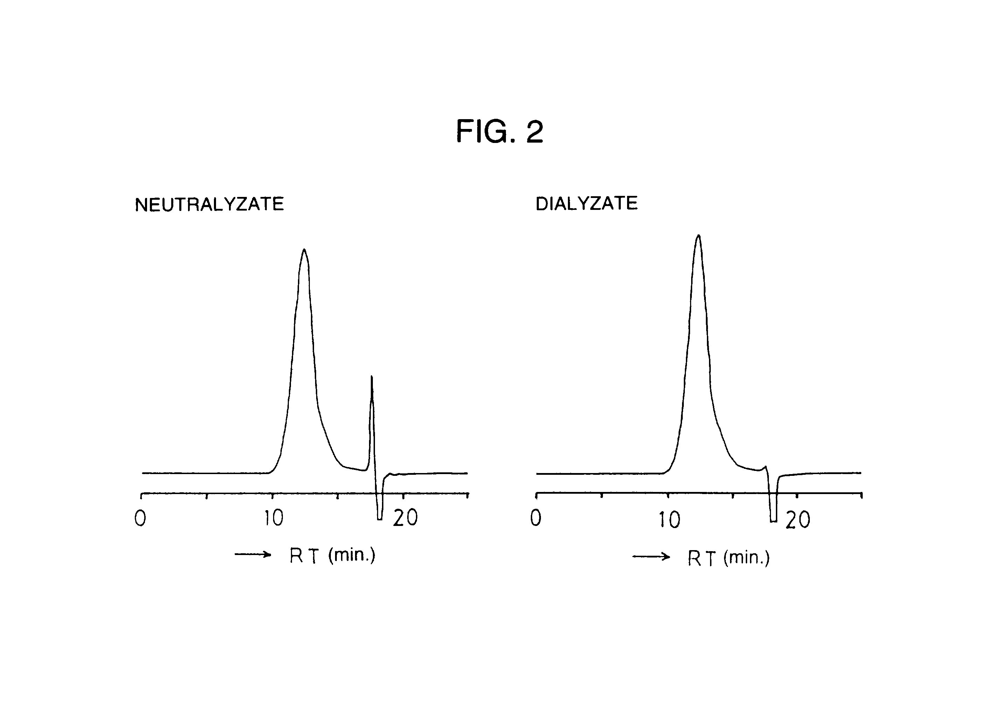

Results of GPC analysis of the acetylated polyallylamine solution before and after the electrodialysis are shown in Fig. 2. The GPC system used comprised an eluate line pump L-6000, a Showdex SE-61 differential refractivity detector, and two columns in series connection, i.e. Asahi Pack aqueous gel filtration type GS-220 HQ (exclusion limit molecular weight: 3,000) and GS-620 HQ (exclusion limit molecular weight: 2,000,000). 20 µl of a sample was used after adjustment to 0.5 g/100 ml. Eluent used was an aqueous 0.4 mole/l sodium chloride solution. Elution was carried out at a temperature of 30°C and a flow rate of 1.0 ml/min.

GPC analysis of the aqueous acetylated polyallylamine solution after the electrodialysis revealed disappearance of a 17.6 min. peak originating from sodium acetate.

### Example 2

### Synthesis of 30 mol.% acetylated polyallylamine hydrochloride

30 mol.% acetylated polyallylamine hydrochloride was obtained by adding hydrochloric acid to the free-type, 30 mol.% acetylated polyallylamine prepared in Example 1, followed by reprecipitation in acetone solvent. Elemental analysis of the hydrochloride revealed that C was 44.75%, H was 9.78% and N was 14.57%, whereas the calculated values of the 30 mol.% acetylated polyallylamine show that C is 45.51%, H is 8.79%, and N is 14.71%. Good correspondence of the found values to the calculated values supported that 30 mol.% of the amino groups was acetylated in the resulting acetylated polyallylamine hydrochloride. Colloidal titration analysis of the hydrochloride also supported that 30 mol.% of the amino groups was acetylated. Colloidal titration was carried out for 5 ml of a sample solution having a concentration of 0.2380 g/l, using Toluidine Blue as a titration indicator and N/400 polyvinyl potassium sulfate as a colloidal titration reagent.

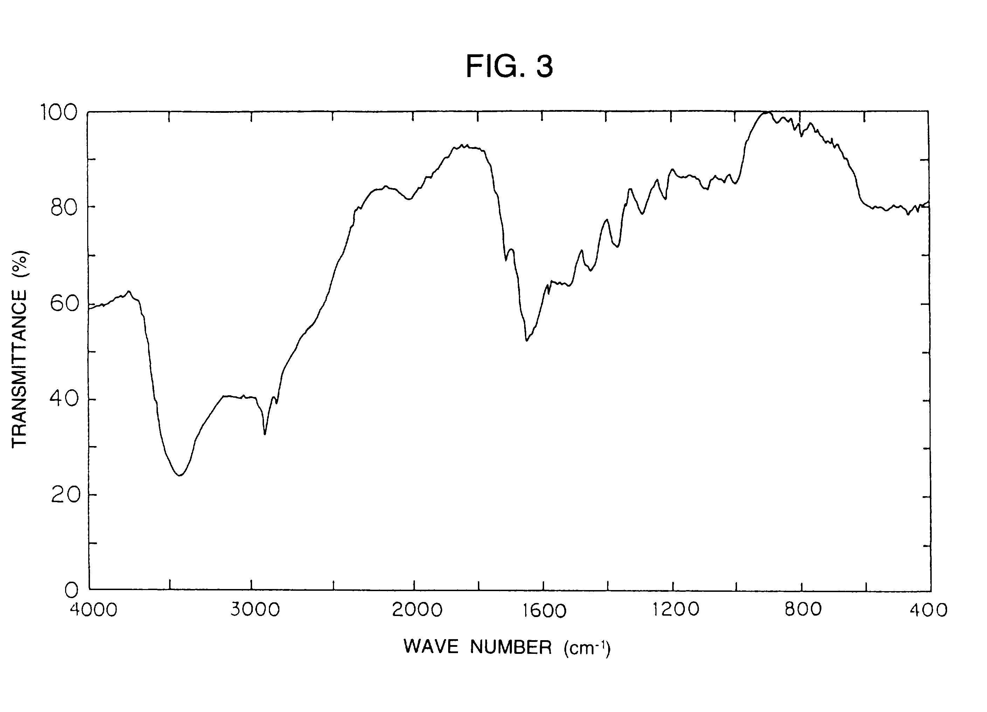

As shown in Fig. 3, IR spectrum of 30 mol.% acetylated polyallylamine hydrochloride showed absorption originating from amidocarbonyl (-NHCO-) at 1,650 cm⁻¹, which supported the acetylated structure.

### Example 3

### Synthesis of 50 mol.% acetylated polyallylamine

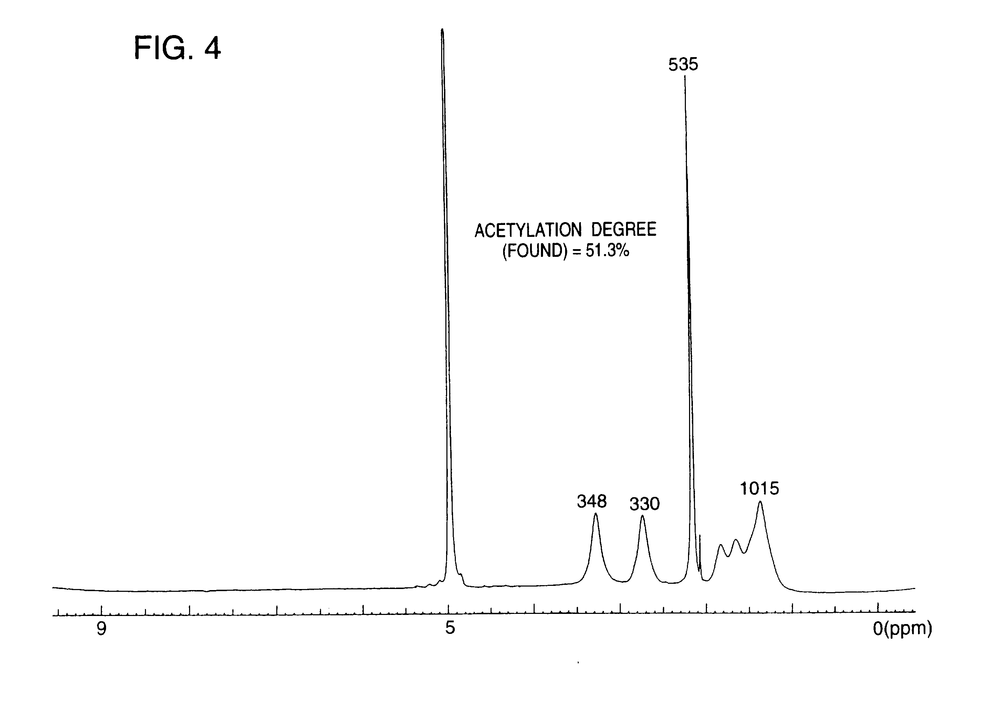

Free-type, 50 mol.% acetylated polyallylamine was obtained in the same manner as in Example 1, except that the amount of acetic anhydride was changed to 315.77 g (3.00 moles), and the aqueous sodium hydroxide solution was changed to 667.31 g (3.07 moles) of aqueous 18.41% sodium hydroxide solution. Its NMR analysis is shown in Fig. 4. Calculated acetylation degree was 51 mol.%.

### Example 4

### Synthesis of 50 mol.% acetylated polyallylamine hydrochloride

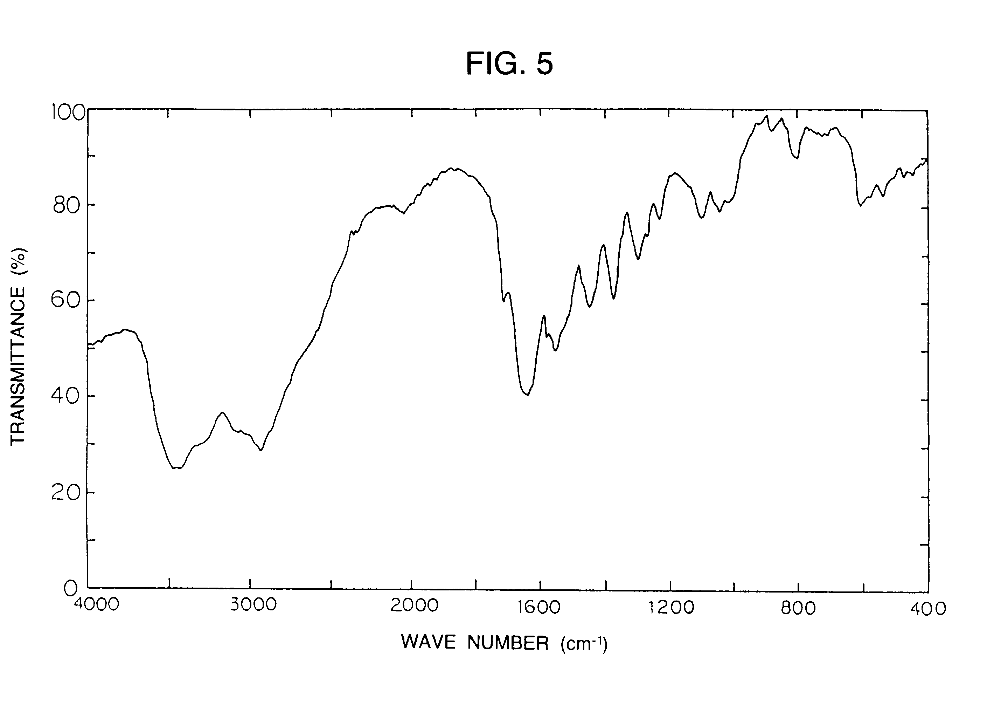

50 mol.% acetylated polyallylamine hydrochloride was obtained from the free-type 50 mol.% acetylated polyallylamine of Example 3 substantially in the same manner as in Example 2. Elemental analysis of the hydrochloride revealed that C was 49.40%, H was 9.87%, and N was 14.05%, whereas calculated values of 50 mol.% acetylated polyallylamine hydrochloride show that C is 49.87%, H is 8.89%, and N is 14.54%. Good correspondence of the found values to the calculated values supported that 50 mol.% of the amino groups was acetylated in the resulting acetylated polyallylamine hydrochloride. Furthermore, its IR spectrum as shown in Fig. 5 showed absorption originating from amidocarbonyl (-NHCO-) at 1,650 cm⁻¹, which supported the acetylated structure.

### Example 5

### Synthesis of 50 mol.% acetylated high molecular weight polyallylamine

Free-type, 50 mol.% acetylated polyallylamine was obtained in the same manner as in Example 1, except that 1,722 g of water was added to 1,722 g (6.0 moles in terms of PAA monomer unit) of an aqueous 20% polyallylamine solution PAA-H (trademark of a product made by Nitto Boseki K.K., Japan) having a molecular weight of about 100,000 as a starting material polyallylamine.

### Example 6

### Synthesis of 50 mol.% acetylated high molecular weight polyallylamine hydrochloride

50 mol.% acetylated polyallylamine hydrochloride was obtained in the same manner as in Example 2, using 50 mol.% acetylated polyallylamine obtained in Example 5. Elemental analysis of the hydrochloride revealed that C was 49.32%, H was 10.07%, and N was 14.06%. Furthermore, its IR spectrum showed absorption originating from amidocarbonyl (-NHCO-) at 1,650 cm⁻¹, which supported the acetylated structure.

### Example 7

### Synthesis of 40 mol.% propionylated polyallylamine and its hydrochloride

1,763 g (3.0 moles in terms of PAA monomer unit) of an aqueous 10% polyallylamine solution PAA-10C (trademark of a product made by Nitto Boseki K.K., Japan) having a molecular weight of about 10,000 was charged into a 4-necked, round bottom separable flask having a capacity of 3 ℓ, provided with a stirrer, a Dimroth reflux condenser, a dropping funnel and a thermometer, and then 161.00 g (1.20 moles) of propionic anhydride was slowly dropwise added thereto over 6 hours to complete the entire dropwise addition, while cooling the flask with ice water with stirring at 200 rpm. Temperature was maintained at 0° to 5°C during the reaction.

Then, 447.97 g (1.26 moles) of an aqueous 11.25% sodium hydroxide solution was dropwise added thereto to neutralized the by-produced propionic acid, while continuously cooling the flask with stirring and maintaining the same temperature as above.

After the neutralization, the resulting solution was electrodialyzed over 28 hours in the same manner as in Example 1 to remove the salts, whereby free-type, 40 mol.% propionylated polyallylamine, that is, polymer 40 mol.% propionylated with respect to the total amino groups of the starting material polyallylamine, was obtained.

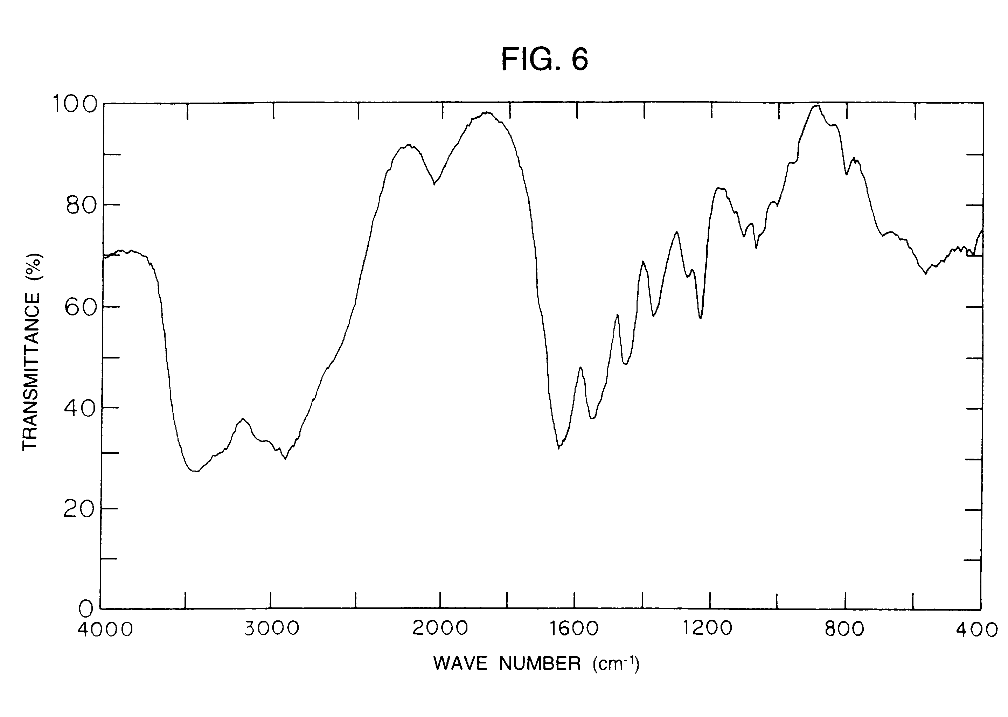

Then, 40 mol.% propionylated polyallylamine hydrochloride was obtained by adding hydrochloric acid to the resulting aqueous polymer solution, followed by reprecipitation in acetone solvent. Elemental analysis of the hydrochloride revealed that C was 49.54%, H was 10.58% and N was 13.26%, whereas the calculated values of 40 mol.% propionylated polyallylamine hydrochloride show that C is 49.75%, H is 9.15%, and N is 13.81%. Good correspondence of the found values to the calculated values supported that 40 mol.% of the total amino groups was propionylated in the resulting propionylated polyallylamine hydrochloride. Furthermore, IR spectrum of 40 mol.% propionylated polyallylamine hydrochloride, as given in Fig. 6, showed absorption originating from amidocarbonyl (-NHCO-) at 1,650 cm⁻¹, which supported the propionylated structure.

### Example 8

### Preparation of highly concentrated aqueous polyallylamine solution

An 10% polyallylamine solution PAA-10C (trademark of a product made by Nitto Boseki K.K., Japan) having a molecular weight of about 10,000 was concentrated in a rotary evaporator to obtain an aqueous 35% polyallylamine solution.

### Examples 9 to 11

### Synthesis of 20 mol.% acylated polyallylamine hydrochlorides

48.40 g (0.3 moles in PAA monomer unit) of the aqueous 35% polyallylamine solution prepared in Example 8 was charged into a 4-necked, round bottom separable flask having a capacity of 3 ℓ, provided with a stirrer, a Dimroth reflux condenser, a dropping funnel and a thermometer, and then 65.80 g of isopropyl alcohol is added thereto to obtain a 15% polyallylamine solution. Then, 0.06 moles of n-butyric anhydride (Example 9), n-valeric anhydride (Example 10) or n-caproic anhydride (Example 11) as a carboxylic acid anhydride, as given in Table 1, was charged into the dropping funnel and then slowly dropwise added thereto over 1.5 hours to complete the entire dropwise addition, while cooling the flask with stirring at 200 rpm. Temperature was maintained at 0° to 5°C during the reaction.

Then, the reaction solution was concentrated at a bath temperature of 30°C, and 20 mol.% acylated polyallylamine hydrochloride was obtained by adding hydrochloric acid thereto while cooling the flask with ice water, immediately followed by reprecipitation in acetone solvent. Elemental analysis of the hydrochloride and calculated elemental values of 20 mol.% acylated polyallylamine hydrochloride are shown in Table 1. Good correspondence of the found values to the calculated values, as shown in Table 1, supported that the resulting acylated polyallylamine hydrochloride was an acylated polyallylamine hydrochloride, 20 mol.% of whose total amino groups was acylated.

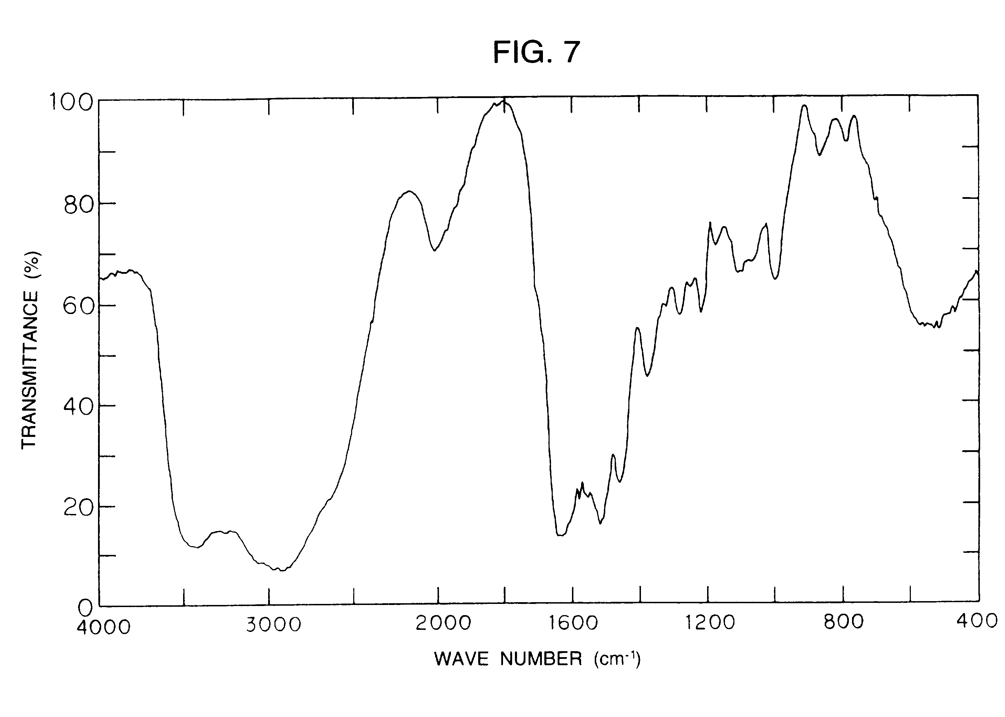

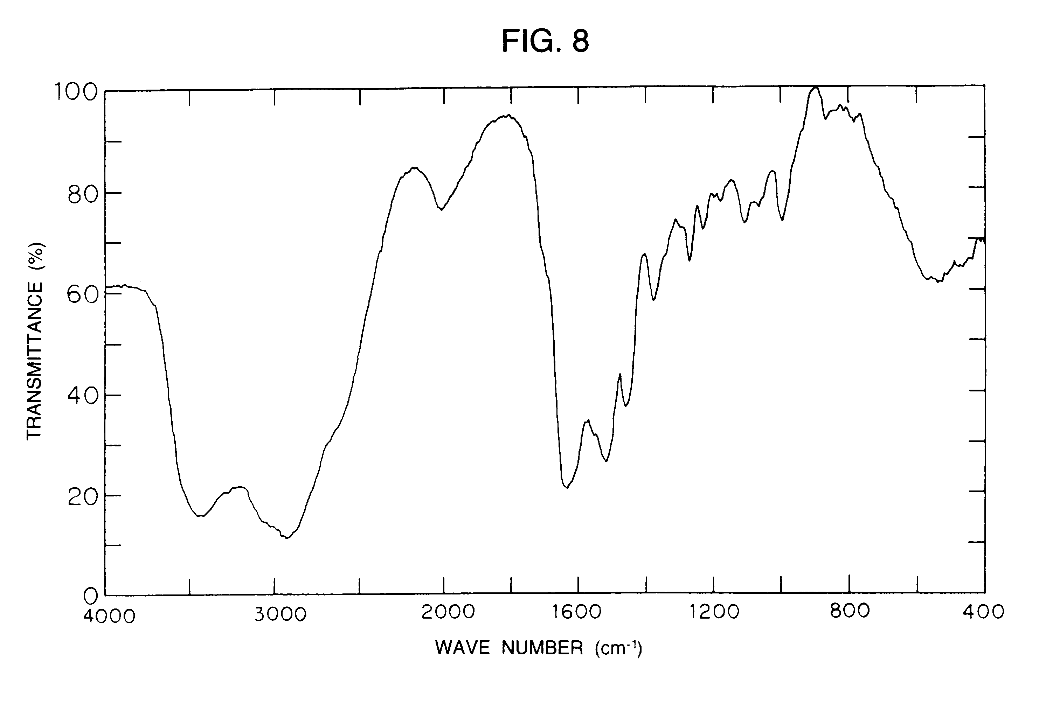

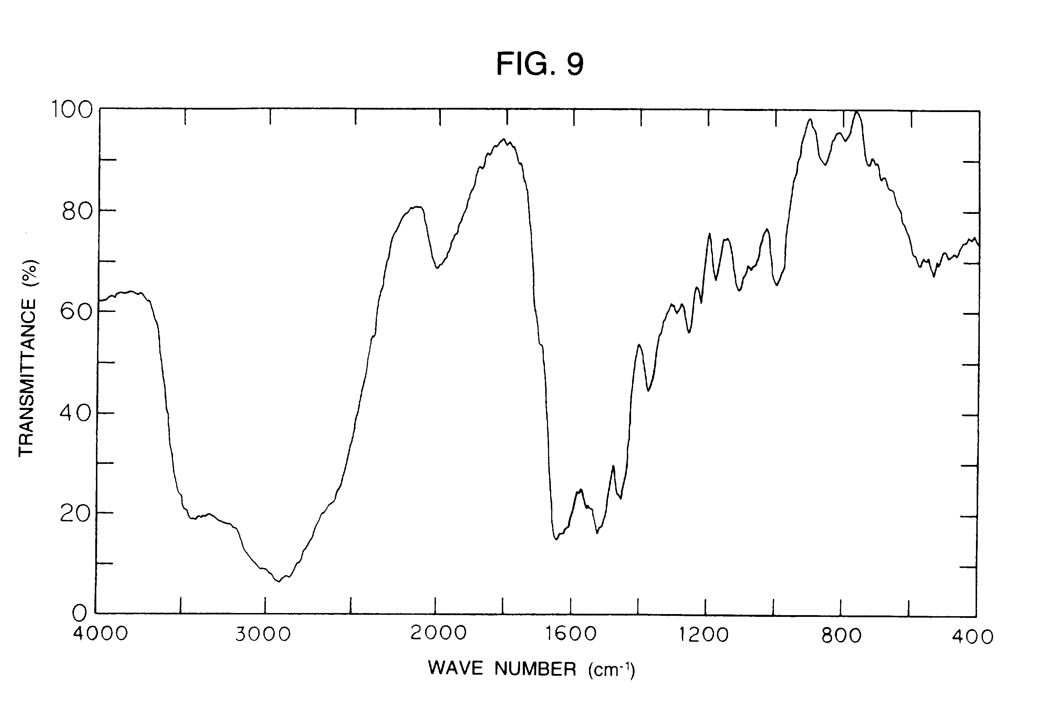

IR spectra of 20 mol.% acylated polyallylamine hydrochlorides, as given in Figs. 7 to 9, showed absorption originating from amidocarbonyl (-NHCO-) at 1,650 cm⁻¹, which supported the acylated structures.

### Examples 12 to 16

### Synthesis of 40 mol.% acylated polyallylamine hydrochlorides

48.40 g (0.3 moles in terms of PAA monomer unit) of the aqueous 35% polyallylamine solution prepared in Example 8 was charged into a 4-necked, round bottom separable flask having a capacity of 3 ℓ, provided with a stirrer, a Dimroth reflux condenser, a dropping funnel and a thermometer, and then 65.80 g of isopropyl alcohol was added thereto to obtain a 15% polyallylamine solution. Then, 0.12 moles of n-butyric anhydride (Example 12), n-valeric anhydride (Example 13), n-caproic anhydride (Example 14), isobutyric anhydride (Example 15) or isovaleric anhydride (Example 16), as shown in Table 1, was charged into the dropping funnel and slowly dropwised added thereto over 3 hours to complete the entire dropwise addition, while cooling the flask with stirring at 200 rpm. Temperature was maintained at 0° to 5°C during the reaction.

Then, the reaction solution was concentrated at a bath temperature of 30°C, and 40 mol.% acylated polyallylamine hydrochloride was obtained by adding hydrochloric acid thereto, while cooling the flask with ice water, immediately followed by reprecipitation in acetone solvent. Elemental analysis of the hydrochloride and calculated elemental values of 40 mol.% acylated polyallylamine hydrochloride are shown in Table 1. Good correspondence of the found values to the calculated values, as shown in Table 1, supported that the resulting acylated polyallylamine hydrochloride was an acylated polyallylamine hydrochloride, 40 mol.% of whose total amino groups was acylated.

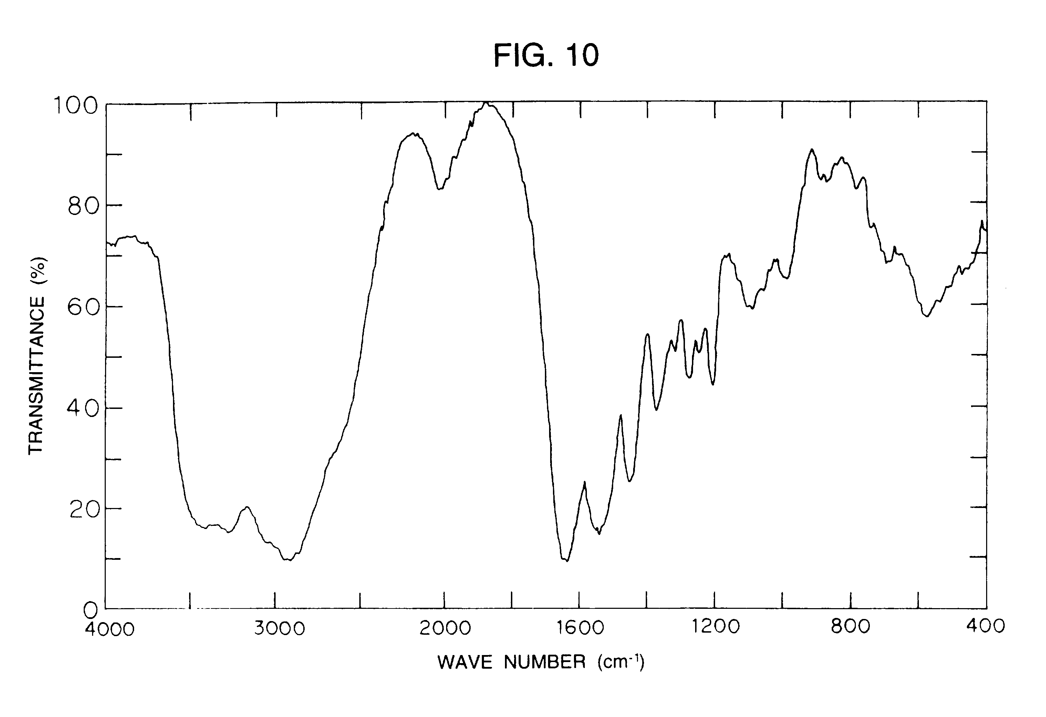

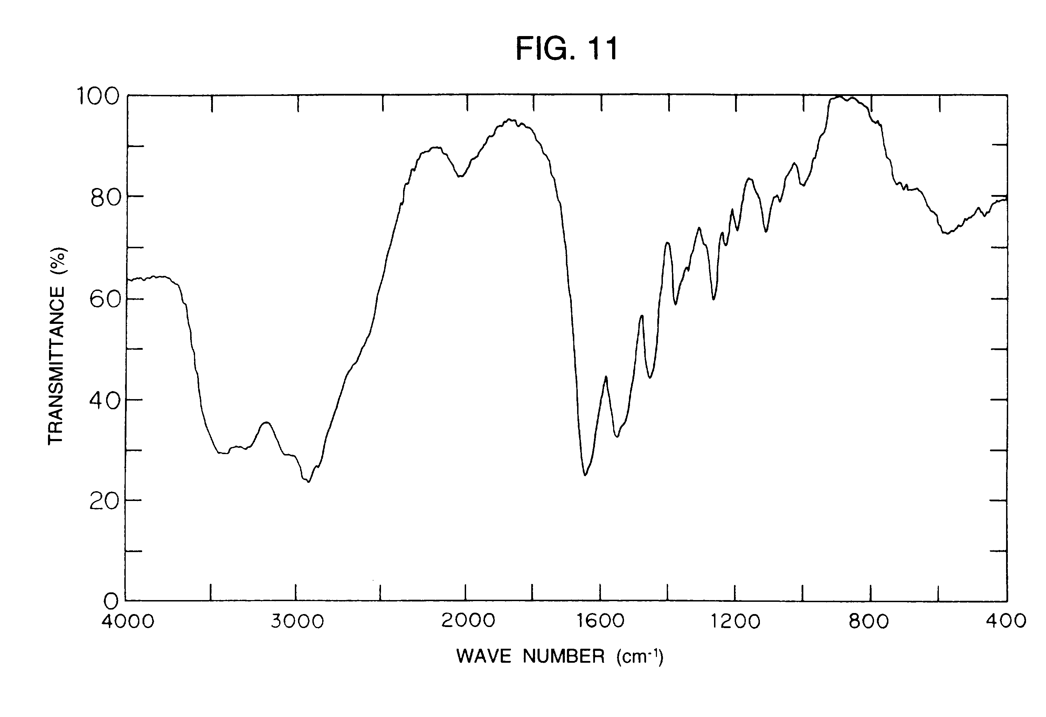

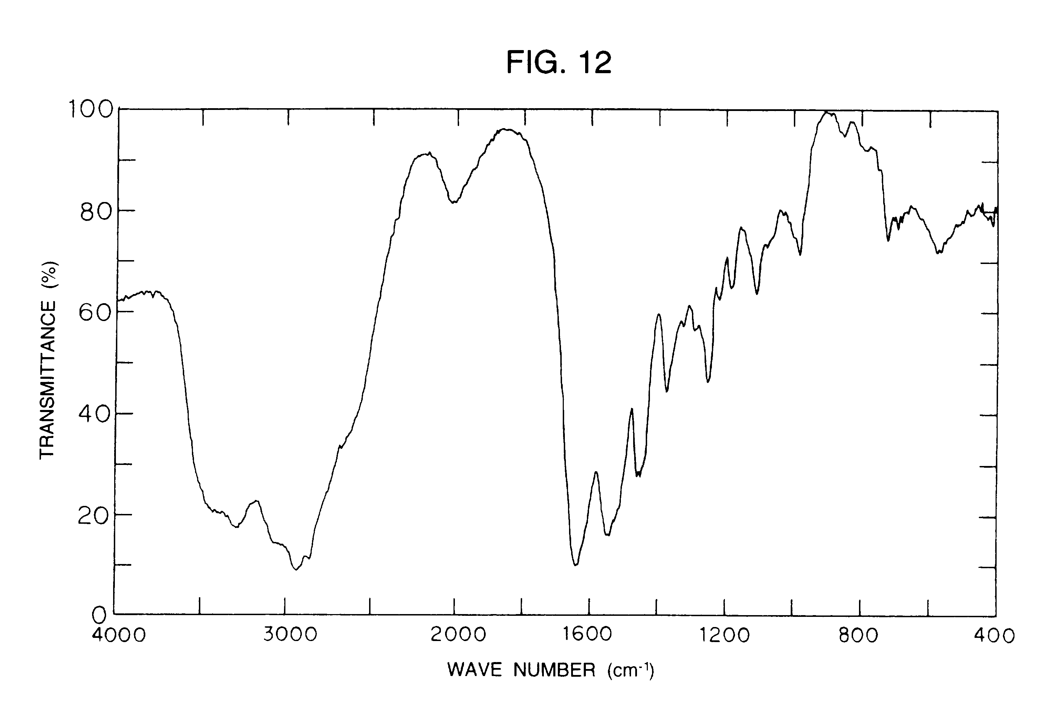

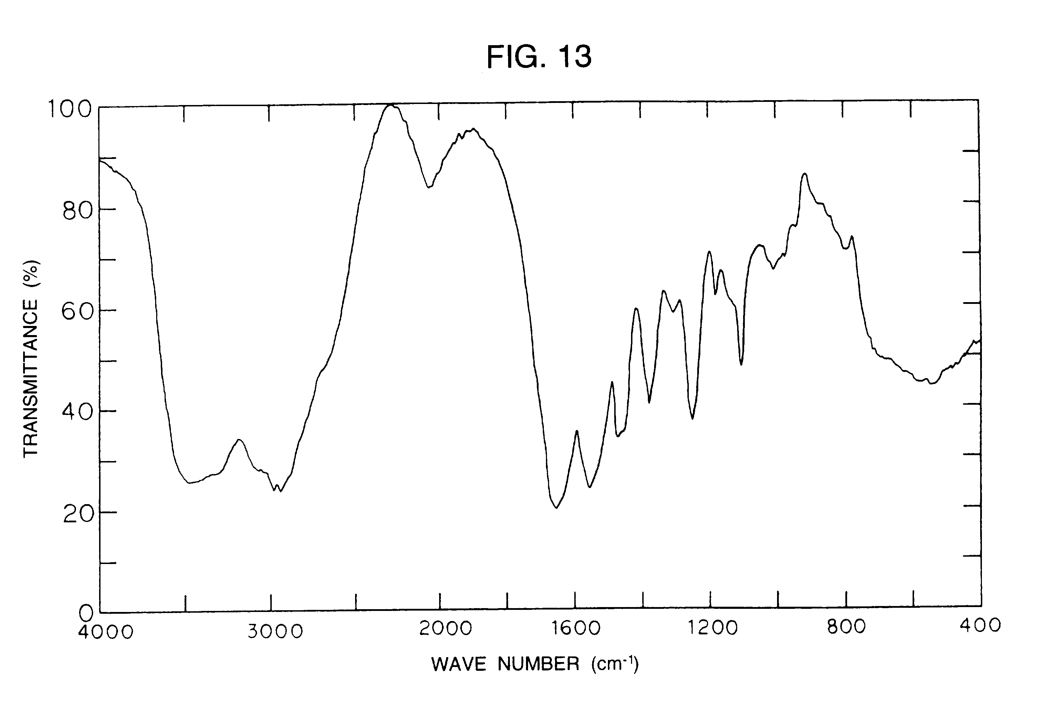

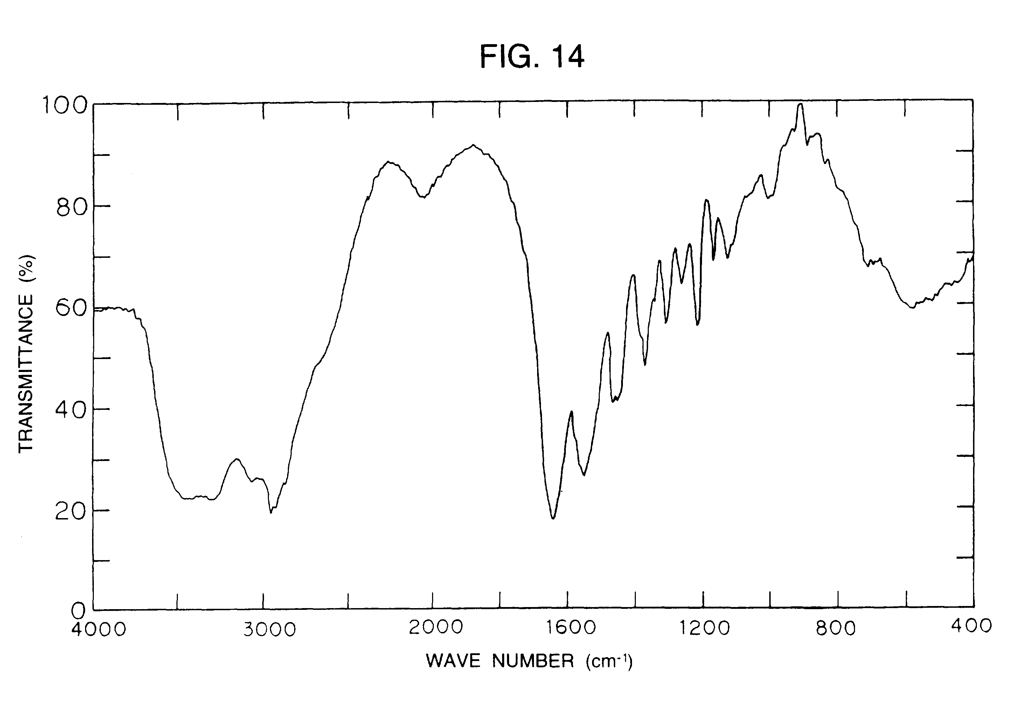

IR spectra of 40 mol.% acylated polyallylamine hydrochlorides, as given in Figs. 10 to 14, showed absorption originating from amidocarbonyl (-NHCO-) at 1,650 cm⁻¹, which supported the acylated structures.

### Example 17

### Synthesis of 20 mol.% n-butyrylated polyallylamine

The 20 mol.% n-butyrylated polyallylamine hydroxide obtained in Example 9 was dissolved in water to obtain an aqueous 5% polymer solution. An equivalent amount of sodium hydroxide to the hydrochloride bonded to the amino groups was added to the polymer solution to neutralize the hydrochloride.

After the neutralization, the solution was electrodialyzed in the same manner as in Example 1 to remove salts, whereby free-type, 20 mol.% n-butyrylated polyallylamine, that is, polymer 20 mol.% n-butyrylated with respect of the total amino groups of starting polyallylamine, was obtained.

In Table 1, kinds and amounts of carboxylic acid anhydrides used for the acylation and kinds, elemental analysis and acylation degrees of acylated polyallylamines are shown.

As described in detail above, the present acylated polyallylamine has a desired cation density by acylating the amino group structure of polyallylamine to the desired acylation degree, and can be easily produced and used as a very effective material in the fields the polyallylamines have been so far used, particularly in the fields requiring a lower cation density. Also, it is suggested that the present acylated polyallylamine is used as a reactive dye-fixing agent, a direct dye-fixing agent, etc

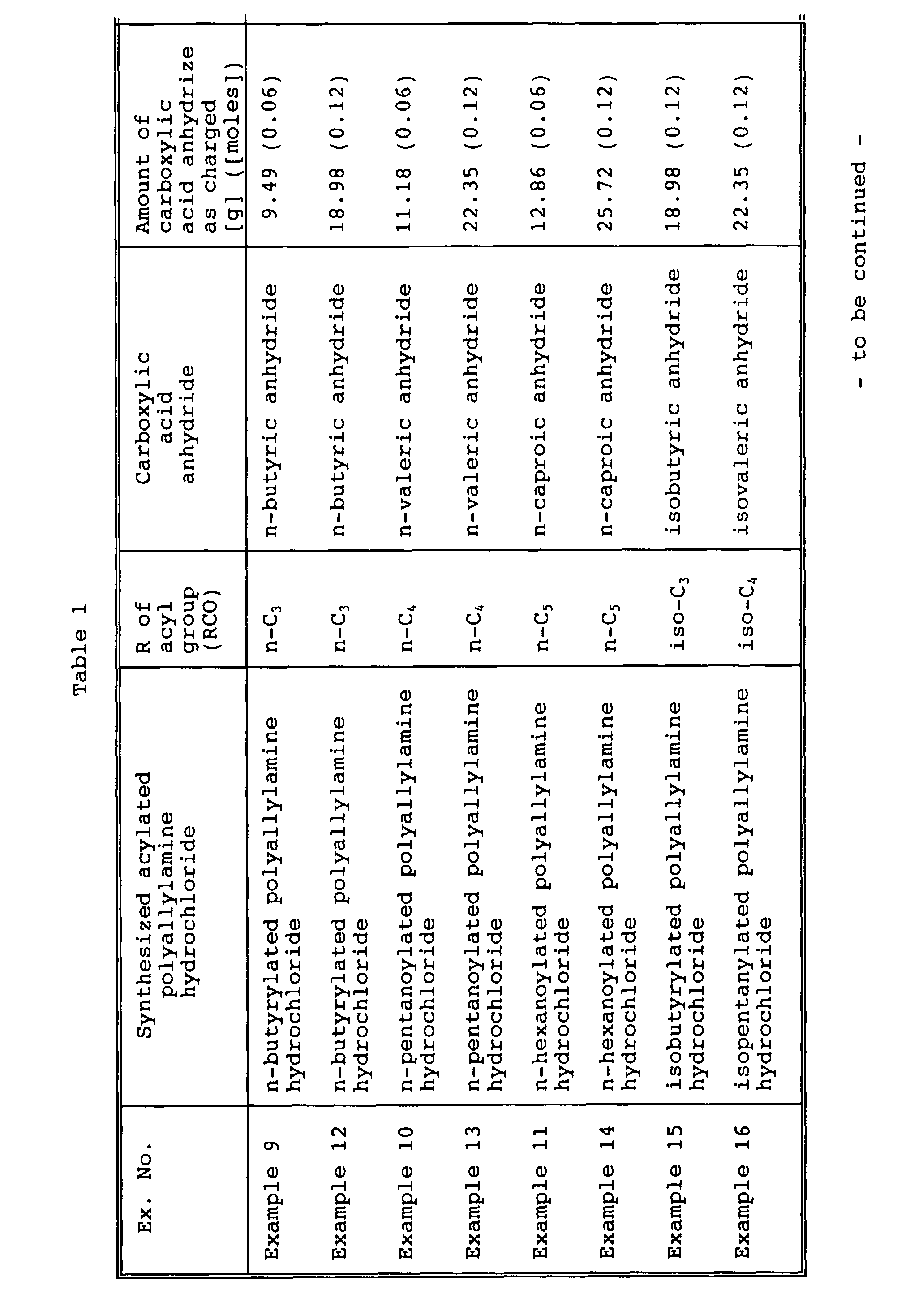

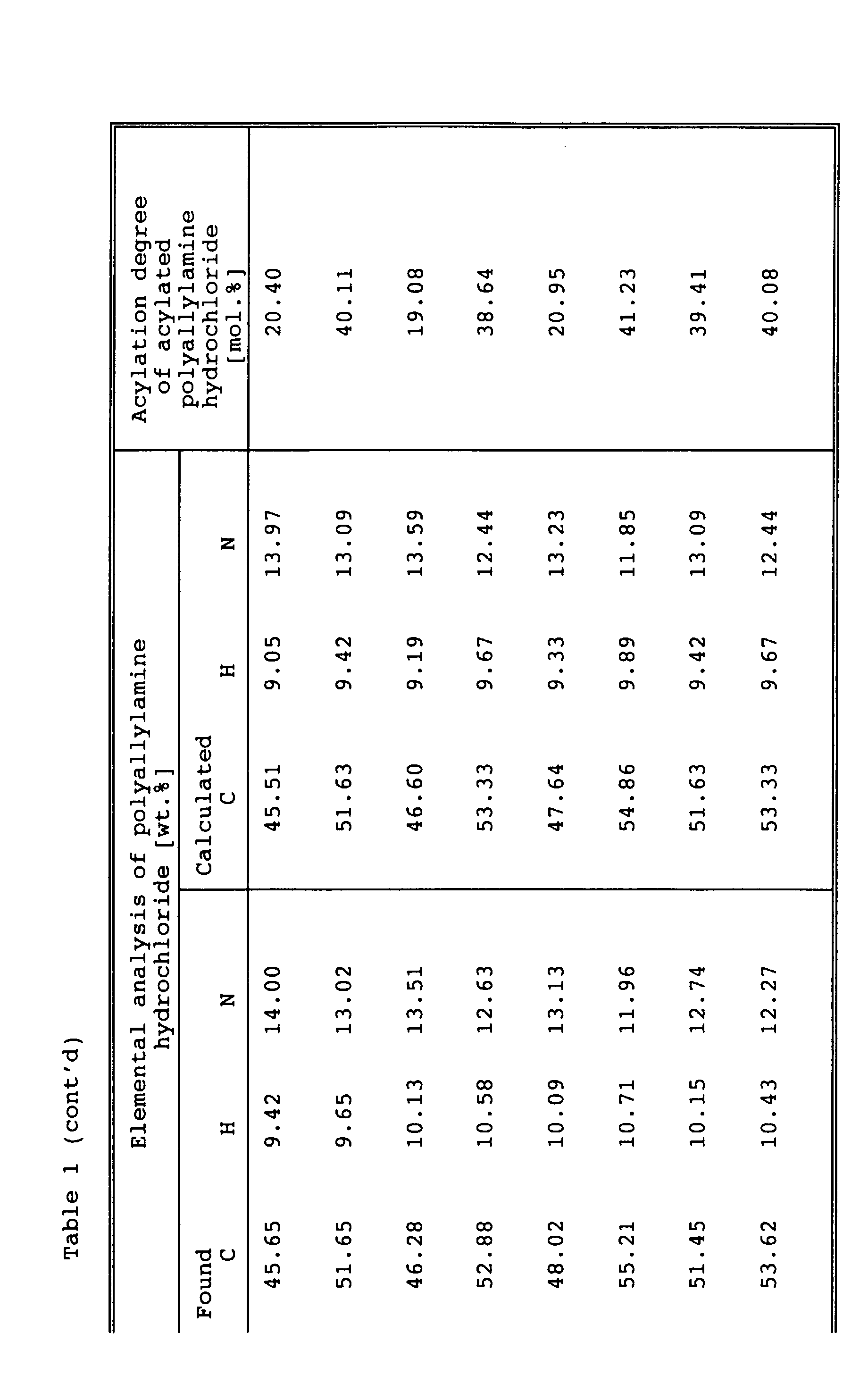

## Claims

1. An acylated polyallylamine represented by the following general formula or a salt thereof: 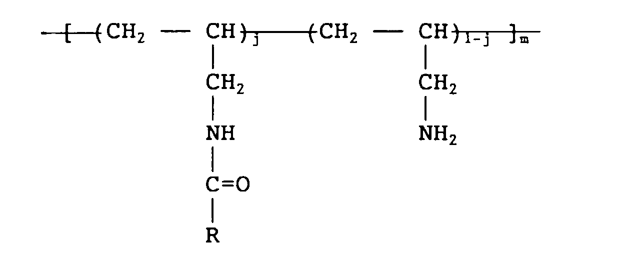 wherein m is an integer of at least 10; j is number satisfying a relationship of 0 < j < 1; and R is an nor iso-alkyl group having 1 to 17 carbon atoms.

2. A process for producing an acylated polyallylamine represented by the following general formula or a salt thereof: 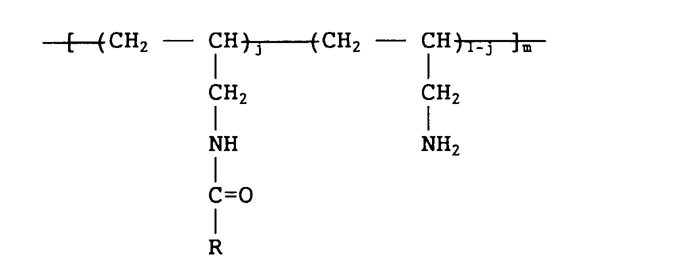 wherein m is an integer of at least 10; j is number satisfying a relationship of 0 < j < 1; and R is an nor iso-alkyl group having 1 to 17 carbon atoms, which comprises treating a polyallylamine represented by the following general formula: 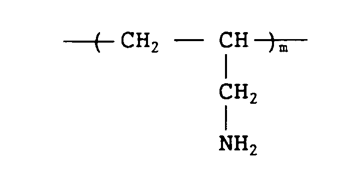 wherein m is an integer of at least 10, with a carboxylic acid anhydride represented by the following general formula:
(RCO)₂O
wherein R is an n- or iso-alkyl group having 1 to 17 carbon atoms, and then neutralizing by-produced carboxylic acid with an alkali, if necessary, followed by further treatment with an organic or inorganic acid.
